# EUROPEAN PATENT SPECIFICATION

(11) **EP 1 335 540 B1**
(45) Date of publication and mention of the grant of the patent: **15.06.2005**
(21) Application number: 03001893.1
(22) Date of filing: 29.01.2003
(51) Int. Cl.: H04L 12/56

(54) **Communications system and method utilizing a device that performs per-service queuing**
Kommunikationssystem und Verfahren mit einer Vorrichtung zur Warteschlangenbildung pro Dienst
Système et procédé de communication utilisant un dispositif pour exécuter une mise en file d'attente par service

(30) Priority: 01.02.2002 US 352862 P; 16.07.2002 US 195529
(43) Date of publication of application: 13.08.2003
(73) Proprietor: Broadcom Corporation, Irvine, California 92618-7013 (US)
(72) Inventor: Burns, Daniel J., Aliso Viejo, California 92656 (US)
(74) Representative: Jehle, Volker Armin, Dipl.-Ing.

(56) References cited:
- EP-A- 0 901 301
- EP-A- 1 039 774
- WO-A-99/53656

## Description

### BACKGROUND OF THE INVENTION

### Field of the Invention

The present invention relates to communications systems and methods that provide a per-service queuing mechanism to support multiple service classes over a single virtual circuit (VC), while minimizing quality of service (QoS) degradation of higher QoS services.

### Related Art

An important aspect of a communications system, which may be based on Asynchronous Transfer Mode (ATM) technology, is its ability to provide specific levels of Quality of Service (QoS) for an established virtual circuit (VC) between a source and destination. Implementation of many higher layer protocols that sit above an ATM layer (such as Point-to-Point Protocol over Ethernet) require that a single VC be used for all data traffic between a traffic source and a particular customer destination. Current systems do not allow for transmission of traffic source data from multiple services (such as Voice-over-IP, data, and video) with differing QoS parameters over a single VC without severely degrading the service's QoS using per-VC queuing mechanisms.

A communications system and method are needed that provide a per-service queuing mechanism that supports multiple service classes over a single VC, while minimizing QoS degradation of higher QoS services. In addition, a communications system and method are needed that can operate concurrently with non-multi-priority queuing, i.e. one queue per-VC.

In WO 99/53656, a computer-implemented method for shaping the output of cells of an output path of a data transmitting device is described. The data transmitting device is configured for switching the cells from a plurality of input paths to the output path to a network. The method includes sorting a plurality of queues, each queue including a plurality of cells associated with a communication device. The plurality of queues is arranged according to a weight and a data rate associated with each plurality of cells resulting in a plurality of sorted queues of queues. An aggregate output of cells from each sorted queue of queues is regulated based upon the data rates of the queues of the each sorted queue of queues and the weights of each sorted queue of queues, such that the scheduled output is coupled to the output path. Traffic shaping is performed, whereby instead of using one traffic shaper for every virtual circuit (VC), the grouping of VC queues with similar data rates is carried out such that their traffic is shaped by a single traffic shaper.

According to EP 1 039 774 A2, an asynchronous transfer mode (ATM) buffer controller and an ATM buffer control method, which maintains a high level of the quality of service of ATM traffic independent of whether shaping is required or not, is realized. Traffic not requiring shaping is queued in a dedicated output queue of every ATM service category and is output in the order of each priority via the control of fixed priority. In the meantime, traffic requiring shaping is queued in any of n pieces of shapers and shaping processing is applied to the traffic. All shapers can select a suitable one of five round robin control sections by the class of the traffic to control the priority of the output of the corresponding ATM traffic.

EP 1 039 774 A2 describes a dynamic rate control (DRC) scheduler for scheduling cells for service in a generic asynchronous transfer mode (ATM) switch. According the DRC, each traffic stream associated with an internal switch queue is rate-shaped according to a rate which consists of a minimum guaranteed rate and a dynamic component computed based on congestion information within the switch. While achieving high utilization, the DRC guarantees a minimum throughput for each stream and fairly distributes unused bandwidth. The distribution of unused bandwidth in DRC need not be shared in proportion to the minimum throughput guarantees, as in weighted fair share schedulers. A closed-loop QoS control is built into DRC by dynamically updating a set of weights based on observed QoS.

### BRIEF SUMMARY OF THE INVENTION

It is the object of the present invention to provide a communications device and a method for controlling data transmission from a communications device.

Embodiments of the present invention provide for a communications device. The communications device includes groups of transmits queues that receive traffic source data from corresponding traffic sources. The communications device also includes a shaping device including traffic shapers, each the traffic shaper coupled to a corresponding one of the queues. The communications device further includes a priority scheduling device including a scheduler and multiplexers, the multiplexers coupled to a corresponding ones of the groups of the transmit queues and the multiplexers being configured to transmit the traffic source data on a corresponding virtual circuit (VC) to customer premise equipment (CPE).

Other embodiments of the present invention provide for a method for controlling data transmission including the steps of initializing a system, the system including transmit queues organized in groups of the transmit queues, a shaping device including a plurality of traffic shapers, each one of the plurality of traffic shapers corresponding to one of the transmit queues, and a priority scheduling device. The method also includes the step receiving cell request data corresponding to the data from corresponding ones of the transmit queues at corresponding ones of the traffic shapers. The method also includes the step of determining a QoS priority value for each the cell request data in the corresponding one of the traffic shapers. The method further includes the step of scheduling transmission of the data based on the determined QoS value.

The advantages of this system and method are that they allow transmit data from multiple services sharing a single VC to be prioritized based on selected QoS requirements. The system and method accomplish this multi-priority queuing without limitation to the number of available transmit queues that can share a VC, without limitation to the number of multi-priority VCs, and without sacrificing scheduling of non-multi-priority VCs

### BRIEF DESCRIPTION OF THE DRAWINGS/FIGURES

The accompanying drawings, which are incorporated in and constitute a part of the specification, illustrate an embodiment(s) of the invention and, together with the description, explain the purpose, advantages, and principles of the invention. In the drawings, like reference numbers indicate the same or substantially the same elements. Furthermore, the left-most digit(s) of the reference numbers indicate the number of the drawing in which the reference number is first used.

FIG. 1 depicts a communications system according to embodiments of the present invention.

FIG. 2 depicts a conventional transmit queue.

FIG. 3 depicts transmit queues and a multiplexer according to embodiments of the present invention.

FIG. 4 depicts a detailed view of a portion of the communications system of FIG. 1.

FIG. 5 is a flowchart showing an overall method of operation of the communications system of FIG. 1 according to embodiments of the present invention.

FIG. 6 is a flowchart showing an initialization portion of the method in FIG. 5.

FIG. 7 is a flowchart showing a cell request data shaping portion of the method in FIG. 5.

FIGs. 8A and 8B is a flowchart showing a scheduling portion of the method in FIG. 5.

FIG. 9 depicts a computer system according to embodiments of the present invention.

### DETAILED DESCRIPTION OF THE INVENTION

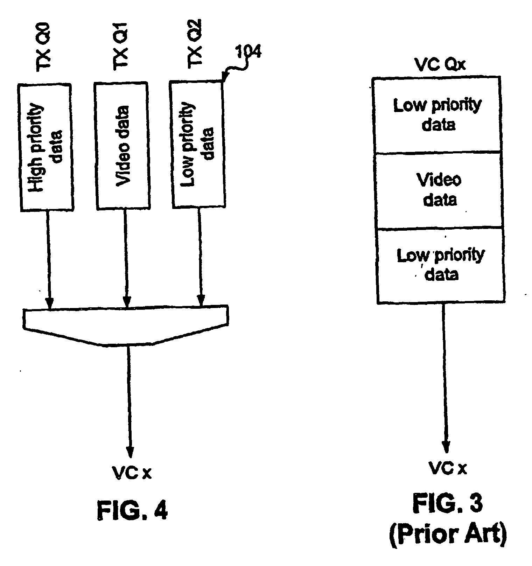

A communications system and related method according to embodiments of the present invention provide the capability to allow traffic source data from one or more transmit queues to be combined on a single VC and to allow the order of transmission from each group to be based on a QoS priority value that is assigned to each queue. It is to be understood that throughout the specification a "group" of transmit queues may include one or more transmit queues. This capability allows multiple service classes to share a VC without sacrificing the ability to prioritize one service class over another. For example, as shown in FIG. 4, with the system and method it is possible to establish one transmit queue for low QoS data services, another for higher QoS data services, and a third for highest QoS video services, and to have all three service classes share a single VC ensuring that the higher QoS transmit packets get sent before lower QoS transmit packets. This is in contrast to conventional systems, as shown in FIG. 3, that stack all priority classes, regardless of priority, in a single transmit queue (per-VC queuing).

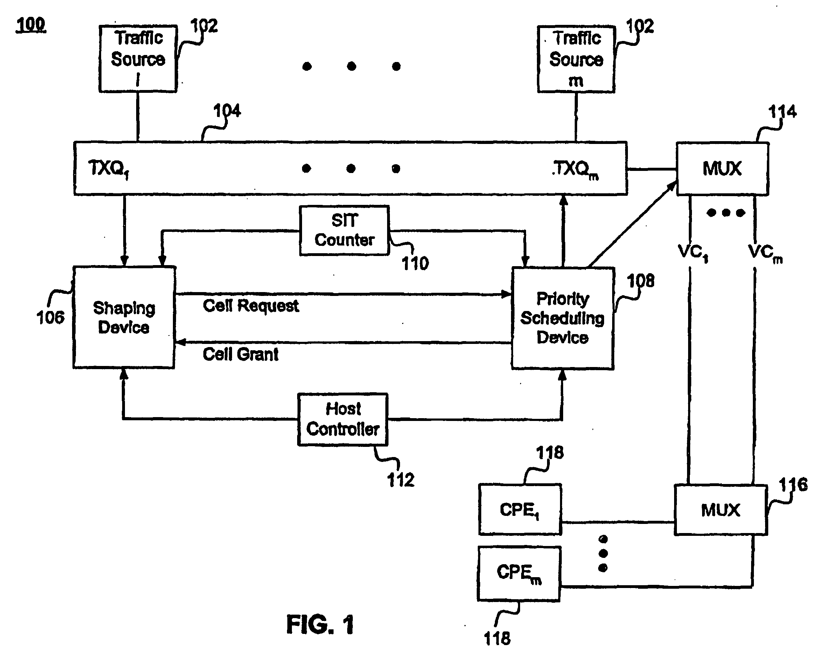

FIG. 1 illustrates a communications system 100, which may be part of an ATM network, according to embodiments of the present invention. The system 100 includes traffic sources 102 that send traffic source data (e.g., voice data, video data, Internet data, etc.) to a transmit queue 104. The transmit queue 104 sends cell request data (e.g., cell availability signals), which is based on the traffic source data, to a shaping device 106 and a priority scheduling device 108. The shaping device 106 shapes the cell request data and outputs a cell request to the priority scheduling device 108. The priority scheduling device 108 sends cell grant information to the shaping device 106 after a cell request has been granted. A shaping and cell transmission cycle is initiated by a shaper interval time (SIT) counter 110, which may be a programmable counter, that sends a SIT signal to the shaper 106 and priority scheduling device 108. A host controller 112 transmits initial parameters to the shaping device 106 and the priority scheduling device 108. A transmit or first multiplexer 114 is coupled to the transmit queue 104 and the scheduler 108. The first multiplexer 114 controls routing of traffic source data sent along n (n = a positive integer from 1 to m) VCs to a receive or second multiplexer 116. Finally, the second multiplexer 116 controls routing of the traffic source data to customer premise equipment (CPE) 118

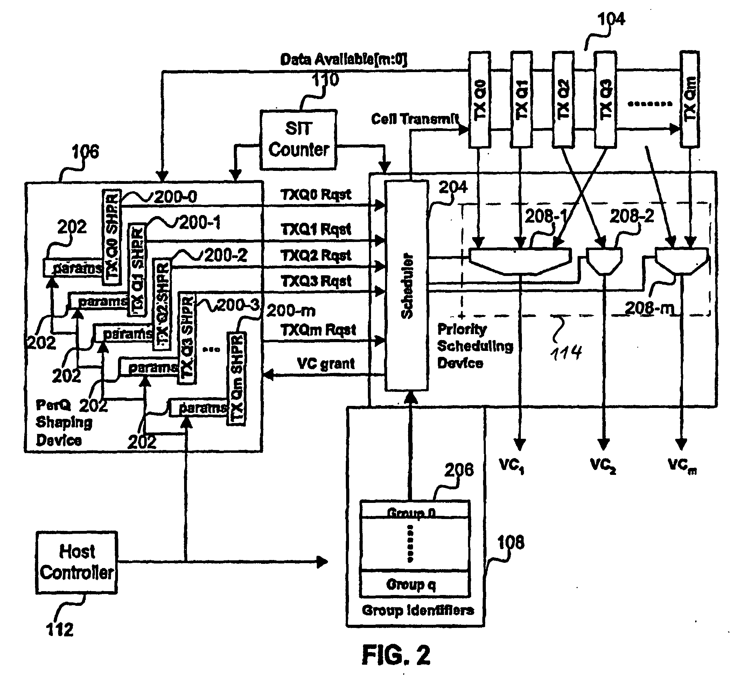

FIG. 2 shows more detailed views of the transmit queues 104, shaping device 106, and priority scheduling device 108. The shaping device 106 includes traffic shapers 200 coupled to corresponding ones of the transmit data queues 104 and parameter storage devices 202 coupled to corresponding ones of the traffic shapers 200. Each of the traffic shapers 200 is coupled to a scheduler 204 in the priority scheduling device 108. The scheduler 204 is also coupled to a group identifier storage 206 and the multiplexer 114. The multiplexer 114 can include a plurality of multiplexers 208. The parameter storage devices 202 and the group identifier storage 206 are coupled to and initialized by the host controller 112.

Again with reference to FIG. 2, the system 100 multiplexes traffic source data from any number of the input queues 104 onto a single VC through use of the per-TX queue shaping device 106 in conjunction with the priority scheduling device 108. As shown in FIGs. 2 and 4, each operational VC is configured to have a group comprising either a single queue 104 (non-multi-priority mode) or to have multiple queues 104 (multi-priority mode). When a VC is configured for multi-priority mode, a multi-priority group is established for that VC by the host controller 112 in the group identifier storage 206. The group identifier storage 206 contains an enable bit and a unique identifier for each group. Each transmit queue 104 and associated traffic shaper 200 targeted for transmission on a particular multi-priority VC (group) becomes a member of that group. The host controller 112 initializes the traffic shaper 200 of each transmit queue 104 as a multi-priority VC member and identifies the member's group using the same unique identifier that was stored in the group identifier storage 206. The system 100 supports a configurable number of groups with any number of members in each group, for example from 1 to n. A transmit queue 104 can be a member of one member group (non-multi-priority mode) or one multi-priority VC group. If it is not a member of a multi-priority VC group, then the transmit queue 104 operates normally as one transmit queue per VC, which is known as per-VC queuing.

As an example shown in FIG. 2, transmit queues 104-0, 104-1, and 104-3 are all members of a first group (a multi-priority group) and are transmitted on VC-1 via multiplexer 208-1. Also, transmit queue 104-2 is a member of a second group (a non-multi-priority group) and is transmitted on VC-2 via one multiplexer 208-2. Further, transmit queues 208-(m-1) and 208-m are members of a third group and are transmitted on VC-m.

With continuing reference to FIG. 2, the traffic shaping device 106 contains the individual traffic shapers 200, each of which is directly associated with a transmit queue 104. Each member of a particular multi-priority VC group has a shaper 200 that is configured by the host controller 112 with the same shaping parameters as all the other members according to the traffic shaping parameters of the VC. Each member of a particular group that has traffic source data available in its associated TX Queue 104 will generate a cell request according to the traffic shaping parameters of the VC at the same time as any other member that also has traffic source data available. The priority scheduling device 108 will compare the priority of cell requests for all members of a group and decide which member is to be granted the transmit request. Once a cell request is granted for any member of a "group", the traffic shaper 200 for all members will update its shaping algorithm as if it received the cell grant, irregardless of whether a particular member received the cell grant or another member of the group received the cell grant. All members of a group must update the shaping algorithm so that the traffic shaping parameters of the VC are not exceeded.

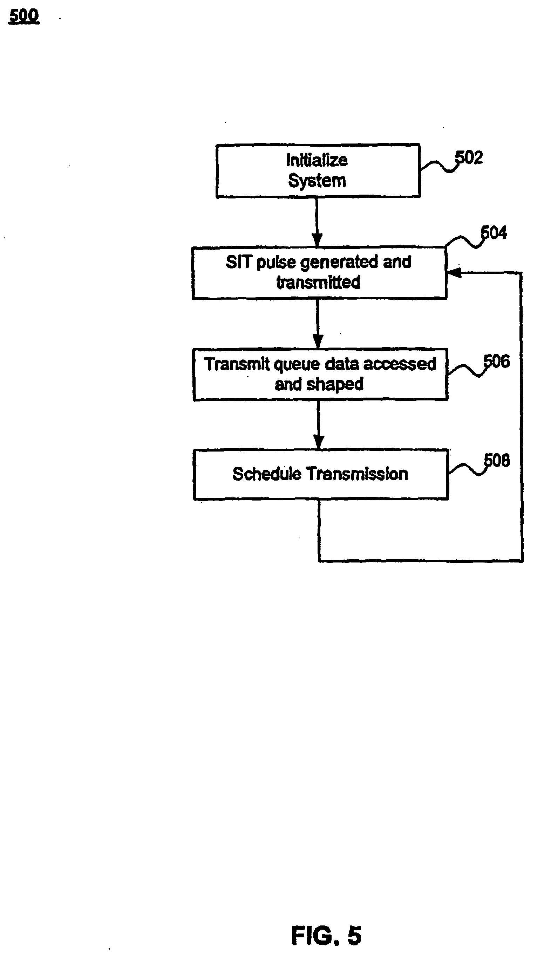

A method 500 according to embodiments of the present invention is shown in FIG. 5. The host controller 112 initializes the system 100 at step 502. At the start of each scheduling interval, the SIT counter 110 generates and transmits a pulse to the shaping device 106 and the priority scheduling device 108 at step 504. At step 506, the shaping device 106 accesses and shapes cell request data from the transmit queues 104. As will be discussed in more detail below, the shaping device 106 shapes cell request data and outputs a cell request having a queue number, a queue priority, and a multi-priority group identifier value, if applicable, with each transmit request At step 508, the priority scheduling device 108 receives cell requests from the shaping device 106 for each transmit queue 104 that has traffic source data available and has satisfied the requirements of the selected QoS parameters of the VC. As many as 'm' valid requests may be received. The priority scheduling device 108 evaluates each request with respect to other requests to determine which request will be cell granted. In other words, the priority scheduler device schedules transmissions based on the cell request.

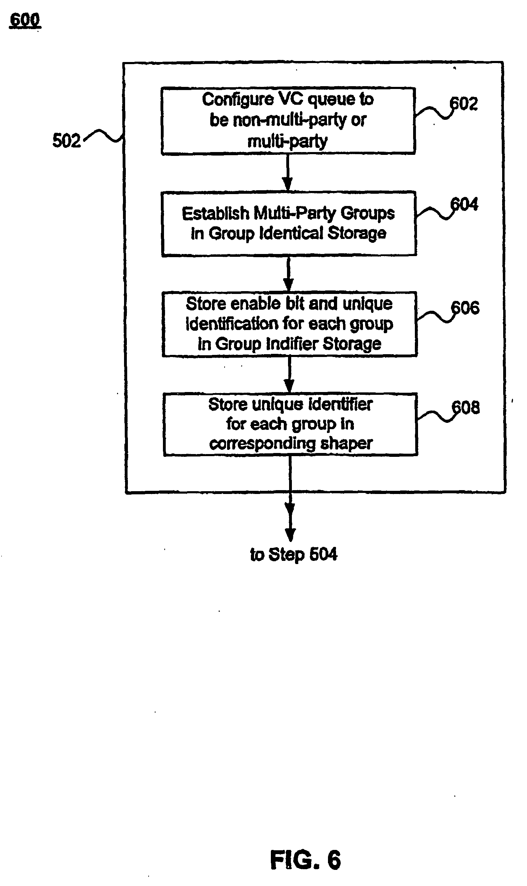

A method 600 that can be used to initialize the system 100 during step 502 is shown in FIG. 6. The queues 104 are configured to be either multi-priority (several queues within a group) or non-multi-priority (only one queue by itself in a group) at step 602. At step 604, multi-priority groups are established in the group identifier storage 206 correlating to the configured groups from step 602. An enable bit and unique group identifier is stored for each group in the group identifier storage 206 at step 606. The same group identifier is stored in a corresponding parameter storage device 202 in step 608.

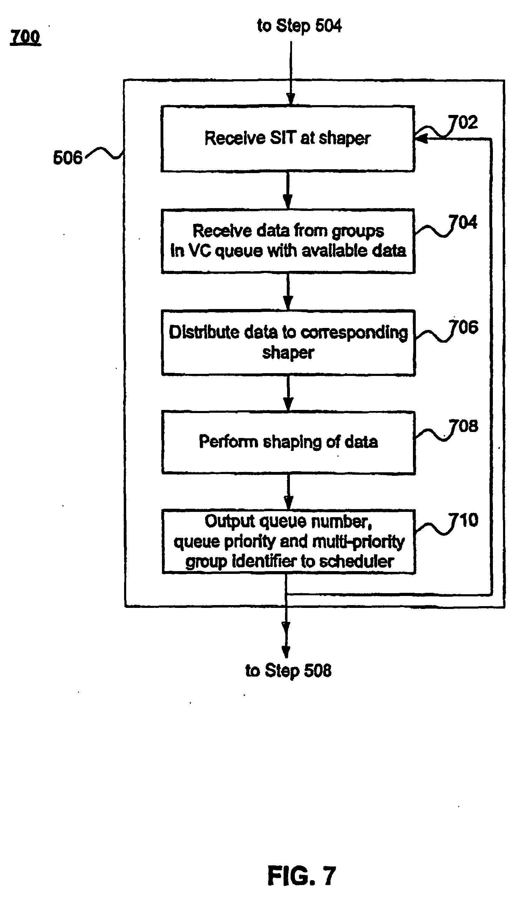

A method 700 that can be used to access and shape cell request data from the queues 104 is shown in FIG. 7. A pulse from the SIT counter 110 is received at the shaping device 106 to start a shaping interval at step 702. Cell request data is received at the individual traffic shapers 200 from corresponding ones of the queues 104 at 706. At step 708, the traffic shapers 200 based on the QoS parameters stored in the parameter storage devices 202 shape the cell request data. A cell request having a queue number, queue priority, and multiparty identifier, if applicable, is output from the traffic shapers 200 to the priority scheduling device 108 at step 710.

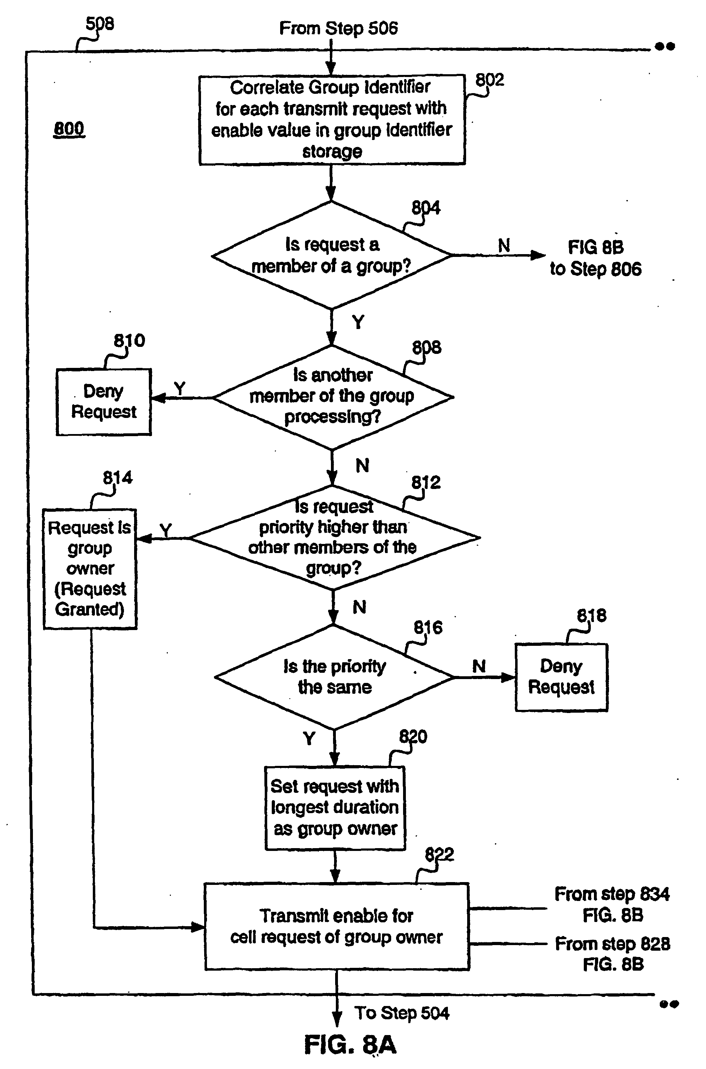

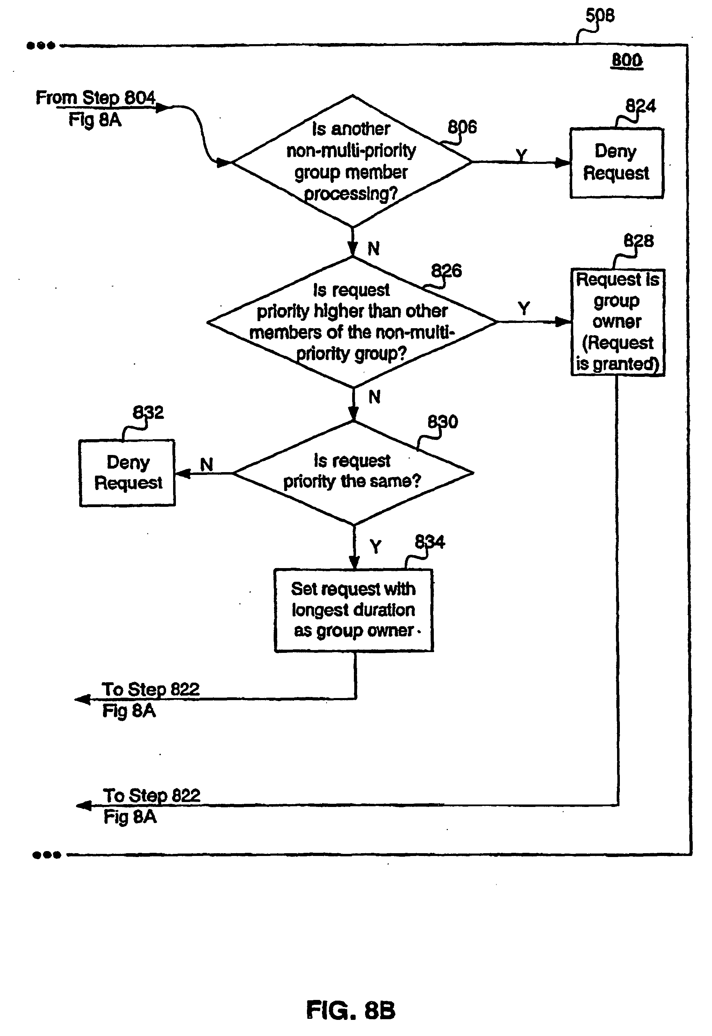

FIGs. 8A-B depict a method 800 performed in the priority scheduling device 108 that prioritizes transmit cell requests from the shaping device 106. The priority scheduling device 108 will have 'n' stored group identifier values, each of which establishes a multi-priority group that consists of more than one member. The method 800 compares the group identifier of each cell request with the unique group identifiers stored in the group identifier storage 206 to determine if the request is a member of a particular multi-priority group at step 802. If the cell request is not a member of a multi-priority group, then the request is evaluated for priority against other non-multi-priority group requests and the established owner of other groups starting at step 806, as shown in FIG. 8B, which is described in detail below. The owner of a group is established according to the cell request priority of each member along with whether a member is currently transmitting a packet.

With continuing reference to FIG. 8A, if the cell request is deemed a member of a multi-priority group, the method 800 will first determine if the cell request or another member (cell request) of the group is already processing a cell request including a packet (that is included of one or more cells) on the VC at step 808. Any member in the process of transmitting a packet becomes the owner of the group by default. All other member requests are denied at step 810 until the current owner completes the processing of the packet. Whether the member's request priority is higher than that of other active member requests is determined at step 812. The cell request is granted to the member with the higher priority request at 814. However, if the request priority is not higher, a determination is made whether the member's request priority is the same as the requestor's priority at step 816. If no, the request is denied at step 818. If two or more group member requests are of equal priority, a weighted round-robin scheduling between equal priority member requests is performed at step 820 to ensure each member gets to transmit its data. The weighted round-robin scheduling gives priority to equal priority members that have been waiting the longest. Then, an enable signal is transmitted to the respective queue 104 and the respective multiplexer 208 at step 822.

FIG. 8B illustrates the operation of the priority scheduling device 108 when the member of the cell request is not a member of a group. A determination is made if another non-multi-priority group member request is already processing a cell request including a packet on a VC at step 806. Any non-multi-priority group member in the process of transmitting a packet becomes the owner of the non-multi-priority group by default. All other member requests are denied at step 824 until the current owner completes the processing of the packet. Whether the member's request priority is higher than that of other active member requests is determined at step 826. The cell request is granted to the member with the higher priority request at 828. However, if the request priority is not higher, a determination is made whether the member's request priority is the same at step 830. If no, the request is denied at step 832. If two or more group member requests are of equal priority, a weighted round-robin scheduling between equal priority member requests is performed at step 834 to ensure each member gets to transmit its data. The weighted round-robin scheduling gives priority to equal priority members that have been waiting the longest. Then, an enable signal is transmitted to the respective queue 104 and the respective multiplexer 208 at step 822 (FIG. 8A).

Once a member's initial request is granted, all other member requests are ignored until the granted member has completed transmission of an entire queued packet. The request priority of the group owner is then compared to the priority of all other group owner and non-multi-priority group requests. The priority scheduling device 108 completes the scheduling process by selecting the highest priority request from all groups and non-multi-priority groups.

All members of a multi-priority VC group share a VC, therefore they are also sharing the QoS parameters of the VC in the traffic shaping device 106. For example, if a multi-priority VC is established to be a Constant Bit Rate (CBR) service with a Peak Cell Rate (PCR) of 'y', then a member will be transmitting at a rate of 'y' once it has attained cell grant status. Based on all members of a group sharing the QoS parameters in the traffic shaping device 106, if any member receives a cell grant, all members of the group update their shaping Parameters in parameter storage 202 and group identifier storage 206 in such a way to suggest that they had received the cell grant, even though they may not have received the cell grant. Accordingly, it is guaranteed that the total transmit bandwidth of all members of the group will not exceed the specified QoS parameters of the VC.

Therefore, the system 100 and method 500 provide for the combining of traffic source data from multiple sources on a single VC that allows a higher priority traffic source data packet to jump ahead of lower priority packets, which helps retain the QoS requirements of the higher priority services. The system 100 and method 500 accomplish the multi-priority VC scheduling without requiring a fixed configuration of the 'm' transmit queues 104 in regards to which group the queue 104 belongs. Also, simultaneous scheduling of many multi-priority and non-multi-priority VCs is allowed.

In its simplest form, which is when all 'm' transmit queues share a single VC, the operation may be seen as being similar to that of a packet switch. In packet switching, when packets arriving on multiple input ports are all destined for the same output port, the switch must decide which packet win get sent to the output port first, second, etc. A packet switch will typically perform the packet scheduling in a round-robin or priority basis. However, the system 100 and method 500 according to embodiments of the present invention differs from this simple operation of a packet switch because the scheduling of packets from the multiple queues 104 must ensure that the total throughput from all transmit queues 104 does not exceed the QoS parameters of the VC. Also, embodiments of the present invention perform cell-interleaving of packets from many sources onto a single output port, where the packet switch does not perform this operation. Further, a significant difference compared to the operation of a simple packet switch is in the present invention's ability to simultaneously schedule many multi-priority and non-multi-priority VCs, while retaining the QoS parameters of each.

Therefore, the system 100 and method 500 according to embodiments of the present invention involve a communications system with a shaping device 106 and scheduling device 108, which may be integrated as part of an ATM Segmentation engine in an ATM network. The shaping device 106 and scheduling device 108 work together to schedule the higher priority traffic before lower priority traffic, while retaining the specified QoS constant bit rate (CBR) or variable bit rate (VBR) parameters of the multi-priority VC. The number of levels of priority and the number of supported multi-priority VCs can be modified to best fit the requirements of a specific implementation. There are no limitations in the number of transmit queues that can share a VC and there are no limitations in the number of multi-priority VCs that can be supported simultaneously. Although, there is a practical limit to the number of supported multi-priority VCs. Assuming that a device has 'm' transmit queues, the practical maximum number of multi-priority VCs is 'm'/2.

The system 100 can be implemented with logic devices to perform the functions and steps recited in FIGs. 5-8B. Alternatively, the functions and steps in FIGs. 5-8B can be implemented in a processor, such as a microprocessor, embedded processor, etc. The processor can execute computer program code to form the steps of the Figures. The computer program code can be stored on a computer useable medium such as memory, computer disk, or the like.

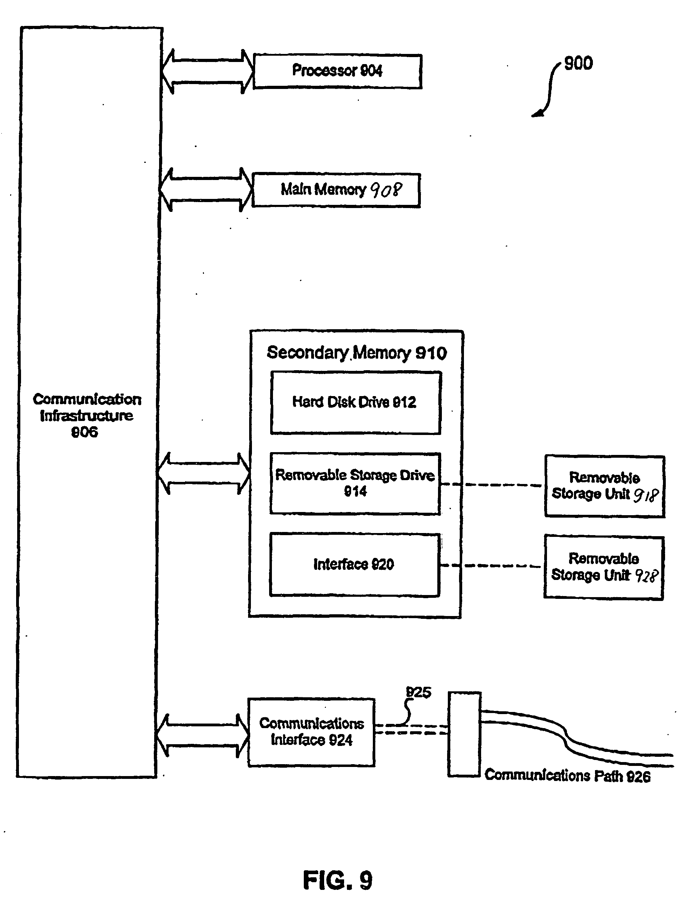

For instance, FIG. 9 illustrates a computer system 900 having one or more processors, such as processor 904. Processor 904 can be a special purpose or a general purpose digital signal processor. The processor 904 is connected to a communications infrastructure 906 (for example, a bus or network). Various software implementations are described in terms of this exemplary computer system. After reading this description, it will become apparent to a person skilled in the relevant art how to implement the invention using other computer systems and/or computer architectures.

Computer system 900 also includes a main memory 908, preferably random access memory (RAM), and may also include a secondary memory 910. The secondary memory 910 may include, for example, a hard disk drive 912 and/or a removable storage drive 914, representing a floppy disk drive; a magnetic tape drive, an optical disk drive, etc. The removable storage drive 914 reads from and/or writes to a removable storage unit 918 in a well known manner. Removable storage unit 918, represents a floppy disk, magnetic tape, optical disk, etc, which is read by and written to by removable storage drive 914. As will be appreciated, the removable storage unit 918 includes a computer usable storage medium having stored therein computer software and/or data.

In alternative implementations, secondary memory 910 may include other similar means for allowing computer programs or other instructions to be loaded into computer system 900. Such means may include, for example, a removable storage unit 922 and an interface 920. Examples of such means may include a program cartridge and cartridge interface (such as that found in video game devices), a removable memory chip (such as an EPROM, or PROM) and associated socket, and other removable storage units 922 and interfaces 920 which allow software and data to be transferred from the removable storage unit 922 to computer system 900.

Computer system 900 may also include a communications interface 924. Communications interface 924 allows software and data to be transferred between computer system 900 and external devices. Examples of communications interface 924 may include a modem, a network interface (such as an Ethernet card), a communications port, a PCMCIA slot and card, etc. Software and data transferred via communications interface 924 are in the form of signals 928 which may be electronic, electromagnetic, optical or other signals capable of being received by communications interface 924. These signals 928 are provided to communications interface 924 via a communications path 926. Communications path 926 carries signals 928 and may be implemented using wire or cable, fiber optics, a phone line, a cellular phone link, an RF link and other communications channels.

In this document, the terms "computer program medium" and "computer usable medium" are used to generally refer to media such as removable storage drive 914, a hard disk installed in hard disk drive 912, and signals 928. These computer program products are means for providing software to computer system 900.

Computer programs (also called computer control logic) are stored in main memory 908 and/or secondary memory 910. Computer programs may also be received via communications interface 924. Such computer programs, when executed, enable the computer system 900 to implement the present invention as discussed herein. In particular, the computer programs, when executed, enable the processor 904 to implement the processes of the present invention, such as the method(s). Accordingly, such computer programs represent controllers of the computer system 900. Where the invention is implemented using software, the software may be stored in a computer program product and loaded into computer system 900 using removable storage drive 914, hard drive 912 or communications interface 924.

### Conclusion

Example embodiments of the present invention have been described herein. As noted elsewhere, these example embodiments have been described for illustrative purposes only, and are not limiting. Other embodiments are possible and are covered by the invention, Such embodiments will be apparent to persons skilled in the relevant art(s) based on the teachings contained herein. Thus, the breadth and scope of the present invention should not be limited by any of the above-described exemplary embodiments, but should be defined only in accordance with the following claims and their equivalence.

## Claims

1. A communications device comprising;
groups of transmit queues that receive traffic source (102) data from corresponding traffic sources (102);
whereby the queues are configured to be either multi-priority with several queues within a group or non-multi-priority with only one queue by itself in a group;
a group identifier storage (206) coupled between a host controller (112) and a priority scheduling device (108), in which multi-priority groups are established and in which an enable bit and a unique group identifier is stored for each group, whereby the same group identifier is stored in a corresponding parameter storage device;
wherein subsequent to said priority scheduling device (108) receiving a pulse from a shaping interval time, SIT, counter (110) coupled to said shaping device and said priority scheduling device (108) said priority scheduling device (108) being configured to receive cell requests from each of said traffic shapers in said shaping device;
wherein said cell requests include a queue number, a queue priority, and a group identifier; and
wherein said priority scheduling device (108) being configured to access data from said group identifier storage (206) to perform a priority scheduling operation, such that cell requests with a highest priority from each of said group of said transmit queues is always sent first,
a shaping device including traffic shapers, each said traffic shaper coupled to a corresponding one of said queues, and
said priority scheduling device (108) including a scheduler and multiplexers (114, 116), said multiplexers (114, 116) coupled to corresponding ones of said groups of said transmit queues and said multiplexers (114, 116) being configured to transmit said traffic source (102) data on a corresponding virtual circuit (VC) to customer premise equipment, CPE, (118);
whereby the priority scheduling device (108) being configured to determine if the cell request is a member of a multi-priority group by comparing the unique group identifier of each cell request, whereby in case the cell request is not a member of a multi-priority group, the request is evaluated for priority against other non-multi-priority group requests and the established owner of other groups, whereby the owner of a group is established according to the cell request priority of each member along with whether a member is currently transmitting a packet;
whereby all members of a multi-priority group share a virtual circuit and therefore share the QoS parameters of the virtual circuit in the traffic shaping device, whereby, if any member receives a cell grant, all members of the group update their shaping parameters in the parameter storage (202) device and group identifier storage (206) in such a way to suggest that they had received the cell grant, even though they may not have received the cell grant.

2. The communications device of claim 1, wherein each of said transmit queues being configured to store one type of quality of service, QoS, data.

3. The communications device of claim 1, wherein:
a first transmit queue in a predetermined group of said groups of transmit queues being configured to store said traffic source (102) data having a high priority; and
second transmit queue in said predetermined group being configured to store said traffic source (102) data having a low priority.

4. The communications device of claim 1, further comprising:
parameter memories individually coupled to each of said traffic shapers wherein when said shaping device receives a signal from said SIT counter (110) each of said traffic shapers accesses a corresponding one of said transmit queues and shapes cell request data from said corresponding one of said transmit queues based on values stored in said parameter memory; and
said traffic shaper being configured to output a cell request including a queue number, a queue priority, and a group identifier to said scheduler.

5. A method for controlling data transmission from a communications device including transmit queues organized in groups of the transmit queues, a shaping device including a plurality of traffic shapers, each one of the plurality of traffic shapers corresponding to one of the transmit queues, and a priority scheduling device (108), the method comprising the steps of:
initializing the system, whereby the queues are configured to be either multi-priority with several queues within a group or non-multi-priority with only one queue by itself in a group, multi-priority groups are established in a group identifier storage (206), an enable bit and unique group identifier is stored for each group in the group identifier storage (206), whereby the same group identifier is stored in a corresponding parameter storage (202) device;
receiving cell request data corresponding to data from corresponding ones of the transmit queues at corresponding ones of the traffic shapers;
determining a QoS priority value for each of said cell request data in said corresponding one of the traffic shapers;
all members of a multi-priority group sharing a virtual circuit and therefore sharing the QoS parameters of the virtual circuit in the traffic shaping device, whereby, if any member receives a cell grant, all members of the group update their shaping parameters in the parameter storage (202) device and group identifier storage (206) in such a way to suggest that they had received the cell grant, even though they may not have received the cell grant;
outputting a cell request having a queue number, a queue priority, and if applicable a multi-priority group identifier value with each transmit request to the priority scheduling device (108); and
scheduling transmission of the data based on said determined QoS priority value,
whereby the priority scheduling device (108) determines if the cell request is a member of a particular multi-priority group by comparing the unique group identifier of each cell request, whereby in case the cell request is not a member of a multi-priority group, the request is evaluated for priority against other non-multi-priority group requests and the established owner of other groups, whereby the owner of a group is established according to the cell request priority of each member along with whether a member is currently transmitting a packet.

6. The method of claim 5, further comprising an initializing step comprising the steps of:
configuring the groups of the transmit queues to be either a first type or a second type;
establishing groups corresponding to said first type in said group identifier storage (206);
storing an enable bit and a unique identification for each of said groups in the group identifier storage (206); and
storing said unique identification in a corresponding one of the plurality of traffic shapers.

7. The method of claim 6, further comprising the steps of:
forming said first type of said groups of the transmit queues as multi-priority groups; and
forming said second type of said groups of the transmit queues as non-multi-priority groups.

8. The method of claim 5, wherein sending said cell request to the priority scheduling device (108) comprises the steps of sending a queue number, said QoS priority value, and a unique identification value, wherein said unique identification value corresponds to data in the group identifier storage (206).

9. The method of claim 5, wherein said scheduling step further comprises the steps of:
correlating a group identifier value in each of said cell request with a group identifier stored in the group identifier storage (206) to determine what group each of said cell requests is a member of;
determining what other members of said group are processing a transmit request;
determining a QoS priority level of said other members of said group that are processing a transmit request; and
assigning group owner status to a member of said group having a highest QoS priority level.

10. The method of claim 9, further comprising the step of transmitting an enable signal to a correlating one of the transmit queues and an associated traffic source (102) to trigger transmission of data stored in said transmit queue.

11. The method of claim 10, wherein if two or more members of said group that are processing a cell request have the same QoS priority level further comprising the step of performing a round robin operation to determine a group owner.

## Patentansprüche

1. Kommunikationsvorrichtung umfassend:
Gruppen von Übertragungswarteschlangen (transmit queues), welche Verkehrsquellendaten (102) von entsprechenden Verkehrsquellen (traffic sources) (102) empfangen,
wobei die Warteschlangen dafür konfiguriert sind, entweder mehrere Prioritäten mit mehreren Warteschlangen innerhalb einer Gruppe oder eine einzelne Priorität mit nur einer einzigen Warteschlange in einer Gruppe zu haben,
einen Gruppenkennungsspeicher (206), der zwischen einer Hauptsteuereinheit (112) und einer Prioritätsablaufplanungseinrichtung (priority scheduling device) (108) verbunden ist, in dem Gruppen mit mehreren Prioritäten festgelegt und ein Aktivierungs-Bit und eine einzigartige Gruppenkennung für jede Gruppe gespeichert sind, wobei dieselbe Gruppenkennung in einer entsprechenden Parameterspeichereinrichtung gespeichert ist,
wobei, nachdem die Prioritätsablaufplanungseinrichtung (108) von einem Shaping-Intervalldauerzähler (shaping interval time counter - SIT-Zähler) (110) einen Impuls empfangen hat, welcher mit der Shaping-Einrichtung und der Prioritätsablaufplanungseinrichtung (108) verbunden ist, die Prioritätsablaufplanungseinrichtung (108) dafür konfiguriert ist, Zellenanfragen von jedem der Traffic-Shaper in der Shaping-Einrichtung zu empfangen,
wobei die Zellenanfragen eine Warteschlangenanzahl, eine Warteschlangenpriorität und eine Gruppenkennung umfassen, und
wobei die Prioritätsablaufplanungseinrichtung (108) dafür konfiguriert ist, auf Daten von dem Gruppenkennungsspeicher (206) zuzugreifen, um einen Prioritätsablaufplanungsbetrieb auszuführen, so dass Zellenanfragen mit höchster Priorität von jeder der Gruppen der Übertragungswarteschlangen immer zuerst gesendet werden,
eine Shaping-Einrichtung, welche Traffic-Shaper umfasst, wobei jeder Traffic-Shaper mit einer entsprechenden der Warteschlangen verbunden ist, und
die Prioritätsablaufplanungseinrichtung (108) einen Scheduler und Multiplexer (114, 116) umfasst, wobei die Multiplexer (114, 116) mit entsprechenden der Übertragungswarteschlangengruppen verbunden sind und die Multiplexer (114, 116) dafür konfiguriert sind, die Verkehrsquellendaten (102) über eine entsprechende virtuelle Verbindung (VC - virtual circuit) an kundeneigene Endgeräte (CPE - customer premise equipment) (118) zu übertragen,
wobei die Prioritätsablaufplanungseinrichtung (108) dafür konfiguriert ist, durch Vergleichen der einzigartigen Gruppenkennung jeder Zellenanfrage zu bestimmen, ob die Zellenanfrage ein Mitglied einer Gruppe mit mehreren Prioritäten ist, wobei die Anfrage, falls die Zellenanfrage kein Mitglied einer Gruppe mit mehreren Prioritäten ist, hinsichtlich ihrer Priorität gegenüber anderen Anfragen bezüglich Gruppen mit einer Priorität und dem festgestellten Inhaber anderer Gruppen bewertet wird, wobei der Inhaber einer Gruppe gemäß der Zellenanfragepriorität jedes Mitglieds und **dadurch**, ob ein Mitglied derzeit ein Datenpaket sendet, festgestellt wird,
wobei alle Mitglieder einer Gruppe mit mehreren Prioritäten eine virtuelle Verbindung und somit die QoS-Parameter der virtuellen Verbindung in der Traffic-Shaping-Einrichtung teilen, wobei, wenn ein Mitglied eine Zellenbewilligung erhält, alle Mitglieder der Gruppe ihre Shaping-Parameter in der Parameterspeichereinrichtung (202) und dem Gruppenkennungsspeicher (206) solchermaßen aktualisieren, dass suggeriert wird, dass sie die Zellenbewilligung erhalten haben, obwohl sie möglicherweise gar keine Zellenbewilligung erhalten haben.

2. Kommunikationsvorrichtung nach Anspruch 1, wobei jede der Übertragungswarteschlangen dafür konfiguriert ist, eine Art von Dienstgütedaten (QoS-Daten - quality of service data) zu speichern.

3. Kommunikationsvorrichtung nach Anspruch 1, wobei
eine erste Übertragungswarteschlange in einer vordefinierten Gruppe der Übertragungswarteschlangengruppen dafür konfiguriert ist, die Verkehrsquellendaten (102) mit hoher Priorität zu speichern, und
eine zweite Übertragungswarteschlange in der vordefinierten Gruppe dafür konfiguriert ist, die Verkehrsquellendaten (102) mit geringer Priorität zu speichern.

4. Kommunikationsvorrichtung nach Anspruch 1, die ferner umfasst:
Parameterspeicher, die einzeln mit jedem der Traffic-Shaper verbunden sind, wobei, wenn die Shaping-Einrichtung von dem SIT-Zähler (110) ein Signal empfängt, jeder der Traffic-Shaper auf eine entsprechende der Übertragungswarteschlangen zugreift und Zellenanfragedaten von der entsprechenden der Übertragungswarteschlangen basierend auf im Parameterspeicher gespeicherten Werten formt, und
der Traffic-Shaper dafür konfiguriert ist, eine Zellenanfrage, die eine Warteschlangenanzahl, eine Warteschlangenpriorität und eine Gruppenkennung umfasst, an den Scheduler auszugeben.

5. Verfahren zum Steuern von Datenübertragungen von einer Kommunikationsvorrichtung, die Übertragungswarteschlangen, welche in Übertragungswarteschlangengruppen organisiert sind, eine Shaping-Einrichtung, welche mehrere Traffic-Shaper umfasst, wobei jeder der mehreren Traffic-Shaper einer der Übertragungsschlangen entspricht, und eine Prioritätsablaufplanungseinrichtung (108) umfasst, wobei das Verfahren die Schritte umfasst:
Initialisieren des Systems, wobei die Warteschlangen dafür konfiguriert werden, entweder mehrere Prioritäten mit mehreren Warteschlangen innerhalb einer Gruppe oder eine einzelne Priorität mit nur einer einzigen Warteschlange in einer Gruppe zu haben, wobei die Gruppen mit mehreren Prioritäten in einem Gruppenkennungsspeicher (206) festgelegt werden, ein Aktivierungs-Bit und eine einzigartige Gruppenkennung für jede Gruppe in dem Gruppenkennungsspeicher (206) gespeichert werden, wobei dieselbe Gruppenkennung in einer entsprechenden Parameterspeichereinrichtung (202) gespeichert wird,
Empfangen von Zellenanfragendaten, welche Daten von entsprechenden der Übertragungswarteschlangen entsprechen, an entsprechenden der Traffic-Shaper,
Bestimmen eines QoS-Prioritätswertes für jede der Zellenanfragedaten in dem entsprechenden der Traffic-Shaper,
wobei alle Mitglieder einer Gruppe mit mehreren Prioritäten eine virtuelle Verbindung und somit die QoS-Parameter der virtuellen Verbindung in der Traffic-Shaping-Einrichtung teilen, wobei, wenn ein Mitglied eine Zellenbewilligung erhält, alle Mitglieder der Gruppe ihre Shaping-Parameter in der Parameterspeichereinrichtung (202) und dem Gruppenkennungsspeicher (206) solchermaßen aktualisieren, dass suggeriert wird, dass sie eine Zellenbewilligung erhalten haben, obwohl sie möglicherweise gar keine Zellenbewilligung erhalten haben,
Ausgeben einer Zellenanfrage mit einer Warteschlangenanzahl, einer Warteschlangenpriorität und, sofern zutreffend, einem Kennungswert der Gruppen mit mehreren Prioritäten mit jeder Übertragungsanfrage an die Prioritätsablaufplanungseinrichtung (108), und
Ablaufplanung der Übertragung der Daten basierend auf dem bestimmten QoS-Prioritätswert,
wobei die Prioritätsablaufplanungseinrichtung (108) durch Vergleichen der einzigartigen Gruppenkennung jeder Zellenanfrage bestimmt, ob die Zellenanfrage ein Mitglied einer bestimmten Gruppe mit mehreren Prioritäten ist, wobei die Anfrage, falls die Zellenanfrage kein Mitglied einer Gruppe mit mehreren Prioritäten ist, hinsichtlich ihrer Priorität gegenüber anderen Anfragen bezüglich Gruppen mit einer Priorität und dem festgestellten Inhaber anderer Gruppen bewertet wird, wobei der Inhaber einer Gruppe gemäß der Zellenanfragepriorität jedes Mitgliedes und **dadurch**, ob ein Mitglied derzeit ein Datenpaket sendet, festgestellt wird.

6. Verfahren nach Anspruch 5, das ferner einen Initialisierungsschritt mit den folgenden Schritten umfasst:
Konfigurieren der Übertragungswarteschlangengruppen derart, dass sie entweder von einer ersten Art oder einer zweiten Art sind,
Festlegen von Gruppen, die der ersten Art im Gruppenkennungsspeicher (206) entsprechen,
Speichern eines Aktivierungs-Bits und einer einzigartigen Kennung für jede der Gruppen im Gruppenkennungsspeicher (206), und
Speichern der einzigartigen Kennung in einem entsprechenden der mehreren Traffic-Shaper.

7. Verfahren nach Anspruch 6, das ferner die Schritte umfasst:
Ausbilden der ersten Art der Übertragungswarteschlangengruppen als Gruppen mit mehreren Prioritäten,
Ausbilden der zweiten Art der Übertragungswarteschlangengruppen als Gruppen mit einer Priorität.

8. Verfahren nach Anspruch 5, wobei das Senden der Zellenanfrage an die Prioritätsablaufplanungseinrichtung (108) die Schritte des Sendens einer Warteschlangenanzahl, des QoS-Prioritätswertes und eines einzigartigen Kennungswertes umfasst, wobei der einzigartige Kennungswert Daten im Gruppenkennungsspeicher (206) entspricht.

9. Verfahren nach Anspruch 5, wobei der Ablaufplanungsschritt ferner die Schritte umfasst:
Korrelieren eines Gruppenkennungswertes in jeder der Zellenanfragen mit einer im Gruppenkennungsspeicher (206) gespeicherten Gruppenkennung, um zu bestimmen, von welcher Gruppe jede der Zellenanfragen Mitglied ist,
Bestimmen welche anderen Mitglieder der Gruppe eine Übertragungsanfrage bearbeiten,
Bestimmen eines QoS-Prioritätsniveaus der anderen Mitglieder der Gruppe, die eine Übertragungsanfrage bearbeiten, und
Zuweisen eines Gruppeninhaberstatus an ein Mitglied der Gruppe mit höchstem QoS-Prioritätsniveau.

10. Verfahren nach Anspruch 9, das ferner den Schritt des Übertragens eines Aktivierungssignals an eine korrelierende der Übertragungsschlangen und eine zugeordnete Verkehrsquelle (102) umfasst, um die Übertragung von in der Übertragungswarteschlange gespeicherten Daten auszulösen.

11. Verfahren nach Anspruch 10, das, wenn zwei oder mehr Mitglieder der Gruppe, die eine Zellenanfrage bearbeiten, dasselbe QoS-Prioritätsniveau haben, ferner den Schritt des Durchführens eines Round-Robin-Verfahrens zum Bestimmen eines Gruppeninhabers umfasst.

## Revendications

1. Dispositif de communication comprenant :
des groupes de files d'attente d'émission qui reçoivent des données de source de trafic (102) à partir des sources de trafic correspondantes (102) ;
pour que les files d'attente soient configurées pour être soit de multi-priorité avec plusieurs files d'attente dans un groupe soit de non-multi-priorité avec seulement une file d'attente en elle-même dans un groupe ;
un stockage d'identifieur de groupe (206) couplé entre un dispositif de commande central (112) et un dispositif d'ordonnancement de priorité (108), dans lequel des groupes de multi-priorité sont établis et dans lequel un identifieur de bit de validation et de groupe unique est stocké pour chaque groupe, de sorte que le même identifieur de groupe est stocké dans un dispositif de stockage de paramètre correspondant ;
dans lequel à la suite dudit dispositif d'ordonnancement de priorité (108) réception d'une impulsion du compteur, (SIT), d'intervalle de temps de mise en forme (110) couplé audit dispositif de mise en forme et audit dispositif d'ordonnancement (108), ledit dispositif d'ordonnancement de priorité (108) étant configuré pour recevoir des demandes de cellule à partir de chacun desdits dispositifs de mise en forme de trafic dans ledit dispositif de mise en forme ;
dans lequel lesdites demandes de cellule comprennent un nombre de file d'attente, une priorité de file d'attente, et un identifieur de groupe, et
dans lequel ledit dispositif d'ordonnancement de priorité (108) étant configuré pour accéder à des données à partir dudit stockage d'identifieur de groupe (206) pour réaliser une opération d'ordonnancement de priorité, pour que des demandes de cellule avec une priorité élevée à partir de chacun desdits groupes desdites files d'attente d'émission soit toujours envoyée en premier ;
un dispositif de mise en forme comprenant des dispositifs de mise en forme de trafic, chacun dudit dispositif de mise en forme de trafic couplé à celle correspondante desdites files d'attente, et
ledit dispositif d'ordonnancement de priorité (108) comprenant un dispositif d'ordonnancement et des multiplexeurs (114, 116), lesdits multiplexeurs (114, 116) couplés à ceux correspondants desdits groupes desdites files d'attente d'émission et lesdits multiplexeurs (114, 116) étant configurés pour émettre lesdites données de source de trafic (102) sur un circuit virtuel correspondant (VC) pour un équipement d'installation de client (CPE) (118) ;
de sorte que le dispositif d'ordonnancement de priorité (108) étant configuré pour déterminer si la demande de cellule est un élément d'un groupe de multi-priorité en comparant l'identifieur de groupe unique de chaque demande de cellule, de sorte que dans le cas où la demande de cellule n'est pas un élément d'un groupe de multi-priorité, la demande est évaluée pour une priorité par rapport aux autres demandes de groupe de multi-priorité et le propriétaire établi d'autres groupes, de sorte que le propriétaire d'un groupe est établi selon la priorité de demande de cellule de chaque élément ainsi que si un élément émet actuellement un paquet ;
pour que tous les éléments d'un groupe de multi-priorité partagent un circuit virtuel et par conséquent partagent les paramètres de qualité QoS du circuit virtuel dans le dispositif de mise en forme de trafic, de sorte que, si un élément quelconque reçoit un accord de cellule, tous les éléments du groupe mettent à jour leurs paramètres de mise en forme dans le dispositif de stockage de paramètre (202) et le stockage d'identifieur de groupe (206) de manière à suggérer qu'ils ont reçus l'accord de cellule, même s'ils peuvent ne pas avoir reçu l'accord de cellule.

2. Dispositif de communication selon la revendication 1, dans lequel chacune desdites files d'attente d'émission étant configurée pour stocker un type de données de qualité de service (QoS).

3. Dispositif de communication selon la revendication 1, dans lequel :
une première file d'attente d'émission dans un groupe prédéterminé desdits groupes de files d'attente d'émission étant configurée pour stocker lesdites données de source de trafic (102) ayant une priorité élevée ; et
une seconde file d'attente d'émission dans ledit groupe prédéterminé étant configurée pour stocker lesdites données de source de trafic (102) ayant une faible priorité.

4. Dispositif de communication selon la revendication 1, comprenant en outre :
des mémoires de paramètres individuellement couplées à chacun desdits dispositifs de mise en forme de trafic dans lesquelles lorsque ledit dispositif de mise en forme reçoit un signal à partir dudit compteur SIT (110), chacun desdits dispositifs de mise en forme de trafic accède à celle correspondantes desdites files d'attente d'émission sur la base des valeurs stockées dans ladite mémoire de paramètre ; et
ledit dispositif de mise en forme de trafic étant configuré pour fournir une demande de cellule comprenant un nombre de files d'attente, une priorité de file d'attente, et un identifieur de groupe audit dispositif d'ordonnancement.

5. Procédé pour commander une émission de données à partir d'un dispositif de communication comprenant des files d'attente d'émission organisées en groupes de files d'attente d'émission, un dispositif de mise en forme comprenant une pluralité de dispositifs de mise en forme de trafic, chacun de la pluralité des dispositifs de mise en forme de trafic correspondant à une des files d'attente d'émission, et un dispositif d'ordonnancement de priorité (108), le procédé comprenant les étapes de :
initialisation du système, de sorte que les files d'attente sont configurées pour être soit de multi-priorité avec de nombreuses files d'attente dans un groupe soit non multi-priorité avec seulement une file d'attente par elle-même dans un groupe, des groupes de multi-priorité sont établis dans un stockage d'identifieur de groupe (206), un identifieur de groupe unique et de bit de validation est stocké pour chaque groupe dans le stockage d'identifieur de groupe (206), de sorte que le même identifieur de groupe est stocké dans un dispositif de stockage de paramètre (202) correspondant ;
réception des données de demande de cellule correspondant aux données de celles correspondantes des files d'attente d'émission sur ceux correspondants des dispositifs de mise en forme de trafic ;
détermination d'une valeur de priorité de qualité QoS pour chacune desdites données de demande de cellule dans ledit celui correspondant des dispositifs de mise en forme de trafic ;
tous les éléments d'un groupe de multi-priorité partageant un circuit virtuel et partageant par conséquent les paramètres de qualité QoS du circuit virtuel dans le dispositif de mise en forme de trafic, pour que, si un élément quelconque reçoit un accord de cellule, tous les éléments du groupe mettent à jour leurs paramètres de mise en forme dans le dispositif de stockage de paramètre (202) et le stockage d'identifieur de groupe (206) de manière à suggérer qu'ils ont reçus l'accord de cellule, même s'ils peuvent ne pas avoir reçu l'accord de cellule ;
fourniture d'une demande de cellule ayant un nombre de files d'attente, une priorité de file d'attente, et si cela est applicable, une valeur d'identifieur de groupe de multi-priorité avec chaque demande d'émission au dispositif d'ordonnancement de priorité (108) ; et
ordonnancement de l'émission des données sur la base de ladite valeur de priorité de qualité QoS déterminée,
de sorte que le dispositif d'ordonnancement de priorité (108) détermine si la demande de cellule est un élément d'un groupe de multi-priorité particulier en comparant l'identifieur de groupe unique de chaque demande de cellule, de sorte que dans le cas où la demande de cellule n'est pas un élément d'un groupe de multi-priorité, la demande est évaluée pour une priorité par rapport aux autres demandes de groupe de non multi-priorité et le propriétaire établi d'autres groupes, pour que le propriétaire d'un groupe soit établi selon la priorité de demande de cellule de chaque élément ainsi que si un élément émet actuellement un paquet.

6. Procédé selon la revendication 5, comprenant en outre une étape d'initialisation comprenant les étapes de :
configuration des groupes des files d'attente d'émission pour être soit d'un premier type soit d'un second type ;
établissement de groupes correspondant audit premier type dans ledit stockage d'identifieur de groupe (206) ;
stockage d'un bit de validation et d'une identification unique pour chacun desdits groupes dans le stockage d'identifieur de groupe (206) ; et
stockage de ladite identification unique dans celui correspondant de la pluralité de dispositifs de mise en forme de trafic.

7. Procédé selon la revendication 6, comprenant en outre les étapes de :
formation dudit premier type desdits groupes des files d'attente d'émission comme des groupes de priorité ; et
formation dudit second type desdits groupes des files d'attente d'émission comme des groupes de non multi-priorité.

8. Procédé selon la revendication 5, dans lequel l'envoi de ladite demande de cellule du dispositif d'ordonnancement de priorité (108) comprend les étapes d'envoi d'un nombre de files d'attente, ladite valeur de priorité de qualité QoS, et une valeur d'identification unique, dans laquelle ladite valeur d'identification unique correspond à des données dans le stockage d'identifieur de groupe (206).

9. Procédé selon la revendication 5, dans lequel ladite étape d'ordonnancement comprend en outre les étapes de :
corrélation d'une valeur d'identifieur de groupe dans chacune desdites demandes de cellule avec un identifieur de groupe stocké dans le stockage d'identifieur de groupe (206) pour déterminer de quel groupe chacune desdites demandes de cellule est un élément ;
détermination de quels autres éléments dudit groupe traitent une demande d'émission ;
détermination d'un niveau de priorité de qualité QoS desdits autres éléments dudit groupe qui traite une demande d'émission ; et
assignation de l'état de propriétaire de groupe à un élément dudit groupe ayant un niveau de priorité de qualité QoS plus élevée.

10. Procédé selon la revendication 9, comprenant en outre l'étape d'émission d'un signal de validation à celle de corrélation des files d'attente d'émission et une source de trafic associée (102) pour déclencher l'émission de données stockées dans ladite file d'attente d'émission.

11. Procédé selon la revendication 10, dans lequel si deux ou plusieurs éléments dudit groupe qui traitent une demande de cellule ont le même niveau de priorité de qualité QoS comprenant en outre l'étape de réalisation d'une opération de test circulaire pour déterminer un propriétaire de groupe.
